# EUROPEAN PATENT APPLICATION

(11) **EP 4 006 363 A1**
(43) Date of publication of application: **01.06.2022**
(21) Application number: 21211404.5
(22) Date of filing: 30.11.2021
(51) Int. Cl.: F16B 12/20, B25B 13/48, F16B 12/14, F16B 12/10, F16B 5/02

(54) **FASTENING ASSEMBLY WITH THREADED MEMBER AND BODY**

(30) Priority: 30.11.2020 IT 202000028925
(71) Applicant: Vipa S.p.A., 41012 Carpi (Modena) (IT)
(72) Inventor: GURIOLI, Anastasio, 48018 Faenza (Ravenna) (IT); POPPI, Sauro, 41019 Soliera (Modena) (IT); POPPI, Vilson, 42047 Rolo (Reggio Emilia) (IT)
(74) Representative: Conti, Marco

(57) **Abstract**

A fastening assembly (1), configured to be inserted into a fastening hole and drivable by a tightening tool (21), comprises: a threaded member (10), including a head (102) that is operatively connectable to the tightening tool (21) to be driven in rotation, and a shank (101) that is connected to the head (102); a body (11), extending along a housing axis (S2), designed to be inserted into the fastening hole and defining an internal cavity (111) configured to house the threaded member (10) positioned in the internal cavity (111). The internal cavity (111) includes a first space, configured to house the head (102) of the threaded member (10), and a second space, configured to house the shank (101) of the threaded member (10). The body (11) comprises an opening (117) having a first end, giving onto the first space of the internal cavity (111) to make the head (102) accessible to the tightening tool (21).

## Description

This invention relates to a fastening assembly for mechanically connecting two parts to each other. The fastening assemblies of this disclosure relate, more specifically, to those cases where the head of a threaded member of the fastening assembly is not visible on the surface of one of the two parts connected.

In this context, the use of a lateral fastening is known, that is to say, a fastening where one of the parts (the connecting part) is provided with a tightening hole that is perpendicular to the longitudinal axis of extension of the threaded member and through which a tightening tool can be inserted in order to tighten the grip of the threaded member on the other part (the connected part).

In accordance with this technical solution, document WO2018060028A1 describes a solution where the threaded member extends along the longitudinal axis and comprises, starting from the innermost component in the connecting part: a first threaded shank, a first profiled head, a connecting pin, a second profiled head and a second threaded shank. The tightening tool, inserted through the tightening hole, comes into abutment against the connecting pin and meshes with the first profiled head and the second profiled head. When the tightening tool is rotated, the threaded member comes into abutment against the connecting part first. Once the threaded member has come into abutment, continuing to rotate the tightening tool brings the connected part closer.

This solution has the disadvantage of having not only a threaded member that is somewhat complex to make but also time-consuming assembly times in that the threaded member must be screwed first onto the connecting part and then onto the connected part.

Other solutions for connecting two parts are described in documents US4685848 and KR101623483B1. In these solutions, too, however, the parts are very complex to make.

In addition to the documents cited above, fastening assemblies and methods such as those described in patent document EP3111084A1 are also known. Solutions like that, however, are also complex and not very practical.

The aim of this invention is to provide a fastening assembly and a fastening method to overcome the above-mentioned disadvantages of the prior art.

This aim is fully achieved by the fastening assembly and the fastening method of this disclosure, as characterized in the appended claims. According to an aspect of it, this disclosure provides a fastening assembly. The fastening assembly is configured to be inserted into a fastening hole. The fastening assembly can be driven by a tightening tool.

The fastening assembly comprises a threaded member. The threaded member extends along a longitudinal axis between a first end and a second end. The threaded member includes a head. The head is operatively connectable to the tightening tool so it can be entrained in rotation. The threaded member includes a shank. The shank is connected to the head. The shank extends along the longitudinal axis.

The fastening assembly comprises a body. The body extends along a housing axis. The body is adapted to be inserted into the fastening hole. The body defines an internal cavity. The internal cavity is configured to house the threaded member, which is disposed in the cavity preferably with its longitudinal axis aligned with the axis of the body. In other solutions, the body and threaded member might not be coaxial. The internal cavity includes a first space. The first space is configured to house the head of the threaded member. The internal cavity comprises a second space. The second space is configured to house the shank of the threaded member.

In an embodiment, the body comprises an opening. The opening extends along a tightening axis. The tightening axis is inclined in relation to the housing axis. The opening has a first end that gives onto the internal cavity, preferably onto the first space of the internal cavity. This feature allows the tightening tool to access the internal cavity in the body from the outside so as to engage the head of the threaded member.

In an embodiment, the body is shaped to prevent movement of the threaded member along a direction parallel to the longitudinal axis. In other words, the body comprises a longitudinal shoulder disposed in the internal cavity to define an abutment for the threaded member along a direction of extraction of the threaded member from the fastening hole, parallel to the longitudinal axis.

In an embodiment, the body is shaped to prevent movement of the threaded member along a radial direction perpendicular to the longitudinal axis. In other words, in an embodiment, the body surrounds and is in contact with the threaded member and prevents it from moving. In an embodiment, the threaded member is rotatable about the longitudinal axis relative to the body.

In an embodiment, the body comprises an inside surface that delimits the internal cavity.

In an embodiment, the inside surface comprises an abutment portion. The abutment portion is opposite the opening with respect to the longitudinal axis for operatively abutting the tightening tool.

In an embodiment, the abutment portion comprises a protrusion. The protrusion extends from the abutment portion of the inside surface along the tightening axis. The protrusion is configured to engage a corresponding hole in the tightening tool.

In an embodiment, the body comprises a first portion. The body comprises a second portion. The first portion includes a respective coupling profile. The second portion includes a respective coupling profile. The coupling profiles of the first and the second portion are connectable to define the internal cavity in the body.

In an embodiment, the threaded member is interposed between the first portion and the second portion of the body.

In an embodiment, the body comprises a plurality of blocking elements.

The plurality of blocking elements is disposed on an outside surface of the body. The plurality of blocking elements is configured to prevent the body from moving along the longitudinal axis of the body relative to the fastening hole.

In an embodiment, the plurality of blocking elements comprises a plurality of teeth. The plurality of teeth at least partly surrounds the outside surface of the body. Each tooth of the plurality of teeth includes a blocking surface that is perpendicular to the longitudinal axis.

In an embodiment, the shank of the threaded member comprises a first portion. The first portion is smooth, that is to say, it is not threaded. The first portion is housed in the body. The shank of the threaded member comprises a second portion that is threaded and protrudes from the body along the longitudinal axis.

In an embodiment, the body comprises a groove that is configured to be coupled to a pushing tool. The groove is disposed preferably on an outside surface. The groove is disposed preferably at one end of the outside surface of the body.

In an embodiment, the tightening axis is perpendicular to the longitudinal axis.

In another embodiment, the tightening axis is inclined to the longitudinal axis at an angle less than 90 degrees. In this embodiment, the head of the threaded member is shaped to mesh with the tightening tool which is inclined relative to the longitudinal axis. In this embodiment, therefore, the head has a tapered gear profile.

According to an aspect of it, this disclosure provides a fastening system. The fastening system comprises a fastening assembly according to any of the features described in this disclosure. In addition to the fastening assembly, the system includes at least one tool that is configured to perform operations on the fastening assembly.

In an embodiment, the tool is a tightening tool. The tightening tool includes a tightening head that is configured to be coupled to the head of the threaded member, to impart thereto a rotation about the longitudinal axis. The tightening tool is insertable into the opening in the body.

In an embodiment, the tool is a pushing tool that is configured to engage a groove on the body. The tool is configured to position the fastening assembly in the corresponding fastening hole.

According to an aspect of it, this disclosure is also intended to protect only a body that is connectable to a threaded member in a fastening assembly according to one or more of the features described in this disclosure. According to an aspect of it, this disclosure provides a fastening method for connecting a first part to a second part by means of a fastening system.

The method comprises a step of preparing a fastening assembly including a threaded member which includes a head and a shank and which is housed in an internal cavity in a body, where the body includes an opening to make the threaded member accessible from the outside of the body. The method comprises a step of making, in the first part, a fastening hole that extends along a longitudinal direction.

The method comprises a step of making, in the first part, a tightening hole that opens into the fastening hole and extends along a tightening direction that is inclined relative to the longitudinal direction. In an embodiment of the method, the tightening direction is inclined at an angle less than 90 degrees to facilitate assembling with parts placed at right angles to each other.

The method comprises a step of inserting the fastening assembly. The step of inserting comprises a step of aligning, in which the opening in the body is aligned with the tightening hole so as to make the threaded member accessible from the outside of the fastening hole.

The method comprises a step of moving the second part closer to a portion of the shank of the threaded member.

The method comprises a step of rotating the threaded member with a tightening tool inserted through the tightening hole and coupled to the head of the threaded member.

In an embodiment, the method comprises a step of assembling the fastening assembly. In the step of assembling the fastening assembly, the threaded member is coupled to the body. More specifically, in an embodiment, a first portion of the body is coupled to a second portion of the body. Further, in the step of assembling, the threaded member is interposed between the first portion and the second portion.

In the step of rotating, the body blocks the threaded member, preventing it from moving along the longitudinal axis and/or along a radial direction perpendicular to the longitudinal axis while allowing the threaded member to rotate about the longitudinal axis.

The method comprises a step of abutting, in which the tightening tool abuts on an inside surface that delimits the internal cavity in the body, the tightening tool preferably abutting on an abutment portion that is part of the inside surface and is opposite the opening in the body.

The method comprises a step of guiding, in which a protrusion which extends from the abutment portion of the inside surface is received in a hole in the tightening tool in order to increase the stability of the tool during the step of rotating.

The method comprises a step of blocking, in which the body is locked to the fastening hole. In this step, a plurality of blocking elements, preferably disposed on an outside surface of the body locks the fastening assembly to the fastening hole to prevent the body from moving along a direction parallel to the longitudinal axis.

In an embodiment, in the step of inserting the fastening assembly, a pushing tool engages a groove that is located on the outside surface of the body.

These and other features will become more apparent from the following description of a preferred embodiment, illustrated by way of non-limiting example in the accompanying drawings, in which:

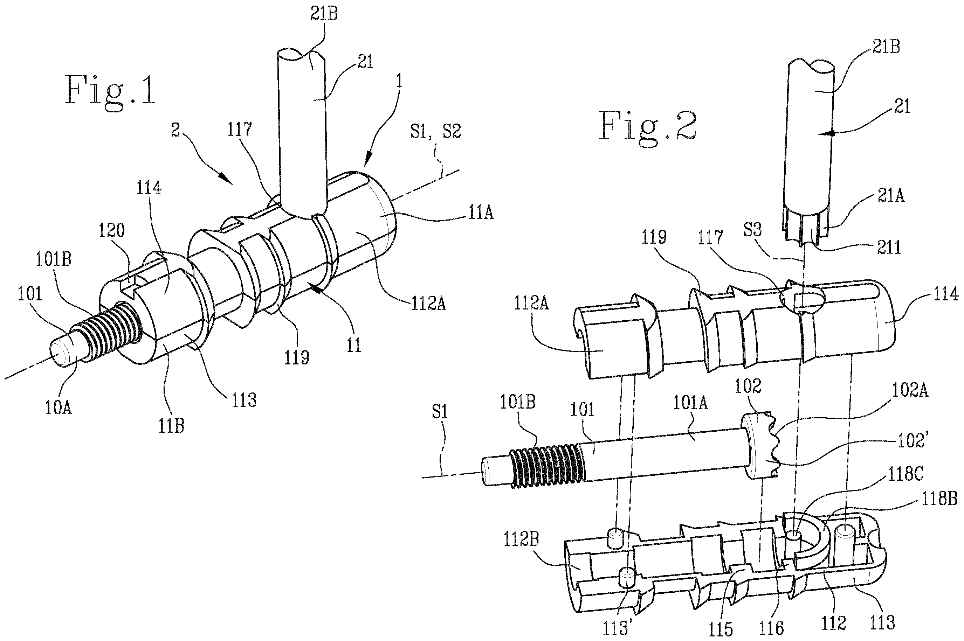

- Figure 1 shows a perspective view of a fastening system according to this disclosure;
- Figure 2 shows an exploded view of the system of Figure 1;

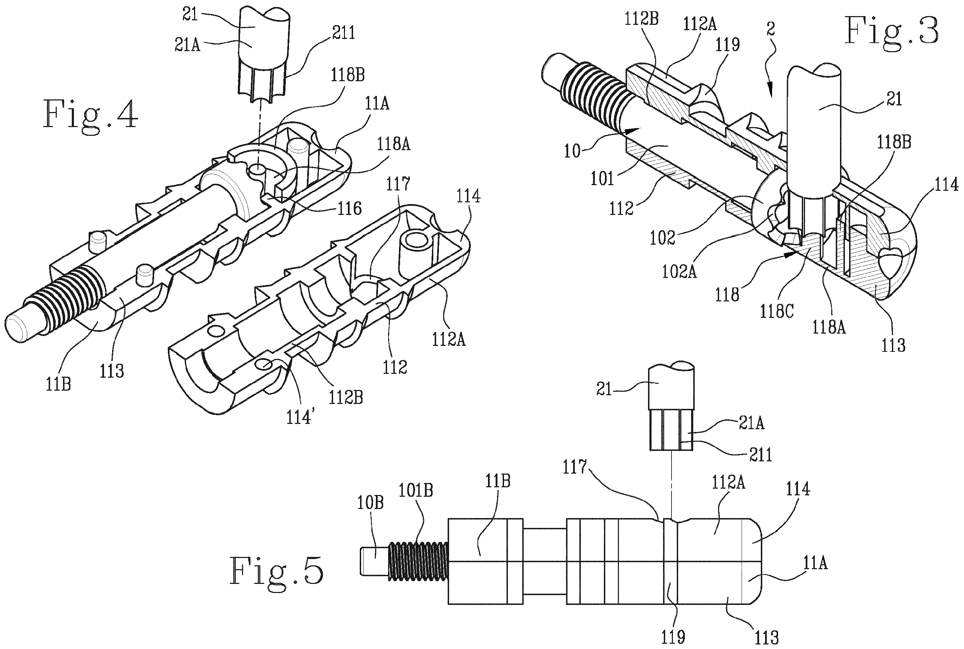

- Figure 3 shows a cutaway perspective view of the system of Figure 1;
- Figure 4 shows a configuration of the system of Figure 1 in which an enclosure that houses the system is open;
- Figure 5 shows a side view of the system of Figure 1;

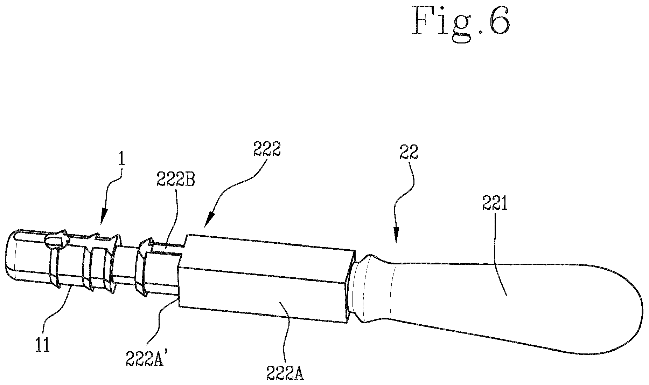

Figure 6 shows a fastening assembly coupled to a pushing tool;

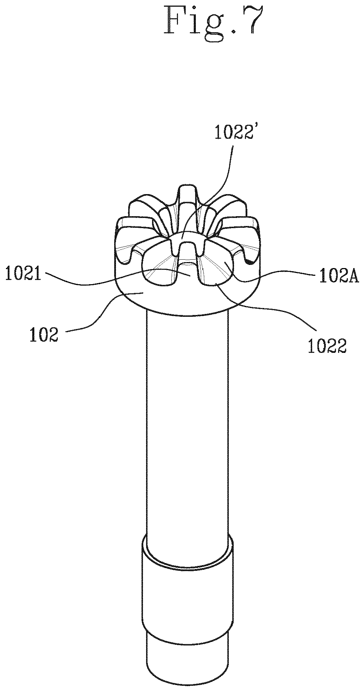

Figure 7 shows a perspective view of an embodiment of a threaded member.

With reference to the accompanying drawings, the reference numeral 1 denotes a fastening assembly and the reference numeral 2, a fastening system.

More specifically, the assembly 1 comprises a threaded member 10. The threaded member 10 extends along a longitudinal axis S1 between a first end 10A and a second end 10B.

The threaded member 10 comprises a shank 101. The threaded member comprises a head 102. The shank of the threaded member comprises a first, smooth portion 101A, without threading and connected to the head 102. The shank of the threaded member comprises a second, threaded portion 101B, spaced from the head 102 and extending as far as the second end of the threaded member 10.

The head 102 is located at the first end 10A of the threaded member 10. The head 102 is shaped like a hollow cylinder, defining a wall 102' that is contoured to define a coupling profile 102A. In an embodiment, the coupling profile 102A has a wavy shape.

Preferably, the head 102 is larger in diameter than the shank 101.

In an example embodiment, the head 102 comprises a plurality of teeth 1021. For example, the plurality of teeth 1021 is tapered in shape. In other words, the tooth 1021 comprises an axial wall 1021A that is inclined relative to the axis of the threaded member 10. In an example embodiment, the plurality of teeth 1021 is rectangular in shape. In other words, the tooth 1021 comprises an axial wall 1021A that is parallel to the axis of the threaded member 10.

In an embodiment, the head 102 comprises a base 1022. The plurality of teeth 1021 transitions into the base 1022 along a radiused edge of predetermined radius. This radiused edge allows the tightening tool 21 to reach the centre of the head.

In an embodiment, the base 1022 comprises a supporting pin 1022'. The supporting pin 1022' is coaxial with the threaded member 10. The supporting pin 1022' extends from the base 1022 in a direction opposite the shank 101. The supporting pin 1022' is configured to be locked to the tightening tool 21. The supporting pin 1022' is surrounded by the plurality of teeth 1021.

The assembly 1 comprises a body 11. The body 11 is configured to house the threaded member 10.

The body 11 extends along a respective housing axis S2 between a first end 11A and a second end 11B.

More specifically, in a preferred embodiment, the threaded member 10 is partly housed in the body 11. More in detail, the first portion 101A of the shank 101 is located inside the body 11 while the second portion 101B is located outside the body 11, preferably protruding from the second end 11B of the body 11.

It should be noted that, operatively, that is to say, with the threaded member 10 located inside the body 11, the longitudinal axis S1 of the threaded member 10 coincides with the housing axis S2 of the body 11. In other words, operatively, the threaded member 10 and the body 11 are preferably coaxial.

The body 11 defines an internal cavity 111 which houses the threaded member 10 and which is delimited by a housing wall 112. The housing wall 112 comprises an outside surface 112A and an inside surface 112B. In a preferred embodiment, the body 11 comprises a first shell 113 and a second shell 114. The first shell 113 and the second shell 114 are configured to be coupled, preferably to be locked to each other with the threaded member 10 located between them. For this purpose, the first shell 113 comprises at least one pin 113' and the second shell 114 comprises at least one corresponding hole 114' in which the pin 113' is configured to be engaged when the first shell 113 is coupled to the second shell 114.

In an embodiment, the housing wall 112 is internally contoured to define a first abutment 115. The housing wall 112 is internally contoured to define a second abutment 116.

The first abutment 115 is configured to prevent the threaded member 10 from moving along the longitudinal axis S1 in an extraction direction VE oriented from the first end 11A of the body 11 to the second end 11B of the body 11. In other words, the first abutment 115 is configured to abut on the head 102 of the threaded member 10 along the longitudinal axis S1 in the extraction direction VE.

The second abutment 116 is configured to prevent the threaded member 10 from moving along the longitudinal axis S1 in an insertion direction VI oriented from the second end 11B of the body 11 to the first end 11A of the body 11. In other words, the second abutment 116 is configured to abut on the head 102 of the threaded member 10 along the longitudinal axis S1 in the insertion direction VI.

The first abutment 115 and/or the second abutment 116 are formed partly on the first shell 113 and/or formed partly on the second shell 114.

In an embodiment, the system 2 comprises a tightening tool 21 that is configured to mesh with the head 102 of the threaded member 10 so as to rotate the latter and transfer a tightening torque in order to connect two parts. The tightening tool 21 comprises a respective coupling profile 211 that is configured to mesh with the profile 102A of the head 102. The tightening tool 21 extends along a tightening axis S3 between a first end 21A and a second end 21B where it is gripped by a user.

Operatively, that is to say, when the tightening tool 21 is engaged on the head 102, the tightening axis S3 may be perpendicular to the longitudinal axis S1 or inclined to the longitudinal axis S1 at an angle less than 90 degrees.

In an embodiment, the tightening tool 21, at its first end 21A, comprises a guide hole that is preferably coaxial with the tightening axis S3.

In an embodiment, the body 11 comprises an opening 117. The opening 117 passes through the housing wall 112 to put the internal cavity 111 in communication with an environment outside the body 11. The walls that delimit the opening 117 are parallel with the tightening axis S3 so that the tightening tool 21 can be operatively inserted through the opening 117. That way, the head 102 of the threaded member 10 is accessible from the outside of the body 11.

In an embodiment, the walls that delimit the opening 117 are perpendicular to the housing axis S2 of the body 11. Alternatively, they may be inclined to the housing axis S2 at an angle less than 90 degrees. Preferably, the opening is formed on the second shell 114.

In an embodiment, the body comprises an abutment portion 118. The abutment portion 118 comprises an abutment surface 118A that forms part of the inside surface 112B of the housing wall 112. The abutment surface receives the first end 21A of the tightening tool 21 in abutment against it.

In an embodiment, the abutment portion 118 comprises a curved wall 118B that extends from the abutment surface 118A. The curved wall 118B is operatively in contact with a lateral surface (a portion proximal to the first end 21A of the tool 21) of the tightening tool 21.

In an embodiment, the abutment portion 118 comprises a pin 118C extending from the abutment surface 118A along a guide axis that preferably coincides with the tightening axis S3 when the tightening tool 21 is meshed with the head 102.

The pin 118C is configured to engage the guide hole of the tightening tool 21. This increases the stability of the tightening tool 21 during tightening operations.

In an embodiment, the body 11 comprises a plurality of blocking elements 119. The plurality of blocking elements 119 is disposed on the outside surface 112A of the housing wall 112. The plurality of blocking elements 119 is configured to prevent the body 11 from moving along the housing axis S2, preferably in the extraction direction VE and also, but optionally, in the insertion direction VI.

In an embodiment, the plurality of blocking elements 119 comprises a plurality of teeth 119, protruding from the outside surface 112A of the housing wall 112 along a radial direction, perpendicular to the housing axis S2.

The plurality of teeth 119 comprises a blocking surface, facing the second end 11B of the body 11 which is preferably perpendicular to the outside surface 112A of the housing wall 112.

In an embodiment, the body 11 comprises a groove 120. The groove 120 is located on the outside surface 112A of the housing wall 112. The groove 120 is located at the second end 11B of the body 11.

The groove 120 is configured to receive a matching tongue of a pushing tool 22. The coupling between the groove 120 and the tongue of the pushing tool 22 allows rototranslation of the body 11 (of the assembly 1). The rototranslation allows inserting the assembly 1 and rotating it to align the opening 117 with a tightening hole made on the parts to be connected. According to an aspect of this disclosure, the system 2 comprises a pushing tool 22. The pushing tool 22 is configured to insert the assembly 1 into a fastening hole made in one of the two parts to be connected.

The pushing tool comprises a grippable handle 221. The pushing tool 22 comprises a pushing head 222. The pushing head 222 is configured to be interfaced with the assembly 1 while the latter is being pushed into the fastening hole.

More in detail, the pushing head 222 comprises a housing member 222A. The housing member 222A is configured to house the second, threaded portion 101B of the shank 101.

In an embodiment, the housing member 222A comprises a first end, connected to the grippable handle 221, and a second end, opposite the first end.

At its second end, the housing member 222A comprises an abutting surface 222A'. The abutting surface 222A' is configured to come into abutment against the part in which the fastening hole is made. This increases the precision with which the assembly 1 is positioned in the fastening hole.

In an embodiment, the housing member 222A is in the form of a hollow, right-angled parallelepiped.

The pushing head 222 comprises a tongue 222B. The tongue 222B is configured to be engaged in the groove 120 of the body 11. The tongue protrudes from the housing member 222A (that is, from the abutting surface 222A') in a direction opposite to that of the grippable handle 221. This allows rotating the pushing tool 22 to adjust the position of the opening 117 relative to a tightening hole through which the head 102 of the threaded member 10 can be accessed.

According to an aspect of it, this disclosure provides a fastening method for connecting a first part to a second part by means of a fastening system 2.

The method comprises a step of preparing a fastening assembly 1 including a threaded member 10 which includes a head 102 and a shank 101 and which is housed in an internal cavity 111 of a body 11, where the body 11 includes an opening 117 to make the threaded member 10 accessible from the outside of the body 11.

The method comprises a step of making, in the first part, a fastening hole that extends along a longitudinal direction.

The method comprises a step of making, in the first part, a tightening hole that opens into the fastening hole and extends along a tightening direction that is inclined relative to the longitudinal direction.

The method comprises a step of inserting the fastening assembly 1, with the opening 117 of the body 11 facing the tightening hole, so as to make the threaded member 10 accessible from the outside of the fastening hole. The method comprises a step of moving the second part closer to a second portion 101B of the shank 101 of the threaded member 10.

The method comprises a step of rotating the threaded member 10 with a tightening tool 21 inserted through the tightening hole and coupled to the head 102 of the threaded member 10.

The method comprises a step of housing, in which the body 11 houses the threaded member 10 inside its internal cavity 111.

More specifically, in the step of housing, a first portion 101A of the shank 101 of the threaded member 10 is housed inside the internal cavity 111. In the step of housing, the portion 101B of the shank 101 of the threaded member 10 protrudes from the body 11.

In the step of rotating, the tightening tool 21 meshes with a coupling profile 102A of the head 102.

In the step of housing (and/or in the step of rotating) the longitudinal axis S1 of the threaded member 10 coincides with the housing axis S2 of the body 11.

In an embodiment, the method comprises a step of assembling the body 11. In the step of assembling the body 11, a first shell 113 and the second shell 114 are coupled, preferably to be locked to each other with the threaded member 10 located between them. More in detail, a pin 113' on the first shell is coupled to a corresponding hole 114' on the second shell 114.

In an embodiment, the step of housing comprises a first step of abutting. In an embodiment, the step of housing comprises a second step of abutting.

In the first step of abutting, a first abutment 115, located in the internal cavity 111 in the body 11, prevents the threaded member 10 from moving along the longitudinal axis S1 in an extraction direction VE oriented from the first end 11A of the body 11 to the second end 11B of the body 11. In other words, the first abutment 115 abuts on the head 102 of the threaded member 10 along the longitudinal axis S1 in the extraction direction VE.

In the second step of abutting, a second abutment 116, located in the internal cavity 111 in the body 11, prevents the threaded member 10 from moving along the longitudinal axis S1 in an insertion direction VI oriented from the second end 11B of the body 11 to the first end 11A of the body 11. In other words, the second abutment 116 abuts on the head 102 of the threaded member 10 along the longitudinal axis S1 in the insertion direction VI.

In the step of rotating, the tightening tool 21 is oriented along a tightening axis S3 which is inclined to the housing axis S2 at an angle less than or equal to 90°.

In an embodiment, the method comprises a step of inserting the tightening tool 21 through the opening 117 in the body.

In an embodiment, the step of rotating comprises one or more of the following steps:
- abutting a first end 21A of the tightening tool 21 on an abutment surface 118A forming part of an inside surface 112B that delimits the internal cavity 111;
- externally guiding the tightening tool 21 by means of a curved wall 118B which extends from the abutment surface 118A and which maintains contact with a lateral surface (a portion proximal to the first end 21A of the tool 21) of the tightening tool 21 during its rotation;
- internally guiding the tightening tool 21 by means of a pin 118C extending from the abutment surface 118A along a guide axis that preferably coincides with the tightening axis S3. The pin 118C is inserted into a guide hole of the tightening tool 21 and remains inserted during rotation.

In an embodiment, the method comprises a step of blocking, in which a plurality of blocking elements 119, disposed on the outside surface 112A of the body 11, prevents the body 11 from moving along the housing axis S2, preferably in the extraction direction VE and also, but optionally, in the insertion direction VI.

In an embodiment, in the step of inserting the fastening assembly 1, a pushing tool 22 engages a groove 120 on the body 11.

The pushing tool 22 receives the second (threaded) portion 101B of the shank 101 in a housing body 222A. As it advances, the pushing tool pushes the assembly 1 into the fastening hole until an abutting surface 222A' of the housing body 222A comes into abutment against the part in which the fastening hole is made. This ensures the opening 117 is aligned with the tightening hole along the longitudinal axis S1 (or the housing axis S2).

The step of inserting comprises a step of aligning. In the step of aligning, the pushing tool 22 is used to rotate the body 11 about the housing axis S2 in order to align the opening 117 with the tightening hole so as to create continuity for the tightening tool 21, which is inserted first into the tightening hole and then into the opening 117 so it can be meshed with the head 102.

## Claims

1. A fastening assembly (1), configured to be inserted into a fastening hole and drivable by a tightening tool (21), the fastening assembly (1) comprising:
- a threaded member (10), extending along a longitudinal axis (S1) between a first end (10A) and a second end (10B), the threaded member (10) including a head (102) that is operatively connectable to the tightening tool (21) to be driven in rotation, and a shank (101), connected to the head (102) and extending along the longitudinal axis (S1);
- a body (11), extending along a housing axis (S2), designed to be inserted into the fastening hole and defining an internal cavity (111) configured to house the threaded member (10) positioned in the internal cavity (111) with the longitudinal axis (S1) aligned with the housing axis (S2) of the body (11), the internal cavity (111) including a first space, configured to house the head (102) of the threaded member (10), and a second space, configured to house the shank (101) of the threaded member (10),
**characterized in that** the body (11) comprises an opening (117) extending along a tightening axis (S3), which is inclined relative to the housing axis (S2) and which has a first end, giving onto the first space of the internal cavity (111) to make the head (102) accessible to the tightening tool (21).

2. The assembly (1) according to claim 1, wherein the body (11) is shaped to prevent the threaded member (10)) from moving along a direction parallel to the longitudinal axis (S1) and along a radial direction, perpendicular to the longitudinal axis (S1), and wherein the threaded member (10) is rotatable relative to the body (11) about the longitudinal axis (S1).

3. The assembly (1) according to claim 1 or 2, wherein an inside surface (112B) of the body (11), delimiting the internal cavity (111), comprises an abutment portion (118) opposite to the opening (117) relative to the longitudinal axis (S1) to operationally abut against the tightening tool (21).

4. The assembly (1) according to claim 3, wherein the abutment portion (118) comprises a pin (118C) extending from the abutment portion (118) of the inside surface (112B) and configured to engage a corresponding guide hole of the tightening tool (21).

5. The assembly (1) according to any of the preceding claims, wherein the body (11) comprises a first portion (113) and a second portion (114), the first portion (113) and the second portion (114) each including a respective coupling profile (113', 114'), and wherein the coupling profiles (113', 114') of the first portion (113) and second portion (114) are connectable to define the internal cavity (111) of the body (11), wherein the threaded member (10) is interposed between the first portion (113) and the second portion (114) of the body (11).

6. The assembly (1) according to any of the preceding claims, wherein the body (11) comprises a plurality of blocking elements (119), disposed on an outside surface (112A) of the body (11) and configured to prevent the body (11) from moving along the housing axis (S2) relative to the fastening hole.

7. The assembly (1) according to claim 6, wherein the plurality of blocking elements (119) comprises a plurality of teeth, at least partly surrounding the outside surface (112A) of the body (11) and each including a blocking surface, perpendicular to the housing axis (S2).

8. The assembly (1) according to any of the preceding claims, wherein the shank (101) comprises a first portion (101A), which is not threaded and is housed in the body (11), and a second portion (101B), which is threaded and protrudes from the body (11).

9. The assembly (1) according to any of the preceding claims, wherein the body (11) comprises, on an outside surface (112A) and at one end (11B) of it, a groove (120), configured to be coupled to a pushing tool.

10. The assembly (1) according to any of the preceding claims, wherein the tightening axis (S3) is perpendicular to the longitudinal axis (S1).

11. The assembly (1) according to any of the claims from 1 to 10, wherein the tightening axis (S3) is inclined to the longitudinal axis (S1) at an angle less than 90 degrees and wherein the head (102) of the threaded member (10) has a tapered profile.

12. The assembly (1) according to any of the preceding claims, wherein the head (102) comprises a supporting pin (1022') oriented in a direction opposite to the shank (101) and configured to be coupled to the tightening tool (21).

13. A fastening system (2), comprising:
- a fastening assembly (1) according to any of the preceding claims;
- a tightening tool (21), including a tightening head (211) configured to be coupled to the head (102) of the threaded member (10), to impart thereto a rotation about the longitudinal axis (S1).

14. The system (2) according to claim 13, comprising a pushing tool, configured to engage a groove (120) of the body (11) and to position the fastening assembly (1) in the corresponding fastening hole.

15. A method for fastening a first part to a second part by means of a fastening system (2), comprising the following steps:
- preparing a fastening assembly (1) including a threaded member (10) which includes a head (102) and a shank (101) and which is housed in an internal cavity (111) of a body (11), where the body (11) includes an opening (117) to make the threaded member (10) accessible from the outside of the body;
- making, in the first part, a fastening hole extending along a longitudinal direction;
- making, in the first part, a tightening hole that opens into the fastening hole and extends along a tightening direction that is inclined relative to the longitudinal direction;
- inserting the fastening assembly (1), with the opening (117) of the body (11) facing the tightening hole, so as to make the threaded member (10) accessible from the outside of the fastening hole;
- moving the second part closer to a portion (101B) of the shank (101) of the threaded member (10);
- rotating the threaded member (10) with a tightening tool (21) inserted through the tightening hole and coupled to the head (102) of the threaded member (10).
